# EUROPEAN PATENT APPLICATION

(11) **EP 3 820 250 A1**
(43) Date of publication of application: **12.05.2021**
(21) Application number: 18785999.6
(22) Date of filing: 06.07.2018
(51) Int. Cl.: H05B 33/08, H02J 9/00, H05B 45/00

(54) **EMERGENCY LUMINAIRE**

(71) Applicant: Barrena Martinez, Miguel Ángel, 01005 Vitoria-Gasteiz (ES)
(72) Inventor: Barrena Martinez, Miguel Ángel, 01005 Vitoria-Gasteiz (ES)
(74) Representative: Isern Patentes y Marcas S.L.
(86) International application number: PCT/ES2018/070488
(87) International publication number: WO 2020/008084

(57) **Abstract**

The invention describes an emergency luminaire (1) comprising: lighting elements (7); mains power supply (8); emergency power supply by means of a battery (10); a charging system (12) for charging the battery (10) with mains power (8); a microprocessor (14) for switching, from the mains power supply (8), to the emergency power supply, by discharging the battery (10) for supplying power to the lighting elements (7); a time meter (16) connected to the microprocessor (14) to determine whether the battery (10) is discharged before a predetermined threshold autonomy time elapses; and indicator means (18, 19, 20) to indicate whether the battery (10) is discharged before the threshold autonomy time elapses. The invention makes it possible to determine whether the luminaire (1) must be replaced because of insufficient autonomy.

## Description

### OBJECT OF THE INVENTION

The present invention is found within the lighting industry. In particular, the object of the invention is an emergency luminaire that makes it possible determining in advance whenever there is a significant decrease in the autonomy time of the luminaire.

### BACKGROUND OF THE INVENTION

There are many facilities lighted by means of emergency luminaires featuring double means of supply: on the one hand, they can be connected to the electrical grid to operate with mains power by default; and, on the other hand, they comprise an emergency battery that is automatically activated in case of power failures in the electrical grid.

Such luminaires incorporate charging devices for charging the battery with mains power when the luminaire is connected to the electrical grid. There are many types of batteries known, including lithium iron phosphate batteries, which provide significant autonomy as well as a large number of charge cycles.

However, when the number of charge cycles is depleted, the battery cannot be charged with sufficient charge to provide a predetermined autonomy, which can lead to a situation of lack of lighting which, depending on the circumstances, can result in material damage and even injuries.

### DESCRIPTION OF THE INVENTION

The present invention describes an emergency luminaire comprising:
- lighting elements to provide lighting;
- power supply means, for supplying power to the lighting elements, comprising:
   - mains power supply, for obtaining power from the electrical grid;
   - emergency power supply, comprising at least one battery, for obtaining power in case of disconnection from, or failure, of the electrical grid; and
   - a control board for coordinating a switching between the mains power supply and the battery or batteries.

The luminaire of the invention is characterized in that it allows the state of charge of the batteries to be tested. For this purpose, the luminaire also incorporates the following components:
- a microprocessor for controlling the control board, which is configured to command the control board to switch from the mains power supply to the emergency power supply, wherein the battery is discharged for supplying power to the lighting elements;
- a time meter connected to the microprocessor to determine if the battery is discharged before a predetermined threshold autonomy time has elapsed; and
- indicator means to indicate if the battery is discharged before the threshold autonomy time has elapsed;

This way, the user is informed, through the indicator means, whether the battery is charged or is being charged, as well as whether, when the battery is fully charged, it contains sufficient charge to provide a predetermined autonomy. If the indicator means indicate that the battery has an autonomy that is lower than a predetermined threshold value, the user can replace the battery to prevent a situation in which there is no lighting in an emergency.

According to a preferred example, the testing is carried out automatically and/or it is pre-programmed. According to another preferred example, the testing is carried out at the discretion of the user by pressing a test switch.

The luminaires can be arranged connected in parallel and thus define a lighting system.

To avoid battery wear during an emergency and therefore preserve the autonomy, each luminaire can include a cut-off switch that interrupts the operation of the battery. The cut-off switch preferably is the same as the test switch.

### DESCRIPTION OF THE DRAWINGS

To supplement the description being made and to aid a better comprehension of the characteristics of the invention according to a preferred example of an embodiment thereof, the present specification is accompanied by a set of drawings in which the following has been represented in an illustrative rather than limitative manner:
Figure 1.- Shows a perspective of the luminaire object of the invention.
Figure 2.- Shows a rear view of the luminaire.
Figure 3.- Shows a detailed side view of the luminaire.
Figure 4.- Shows a perspective view of the luminaire, in an open configuration, where the battery may be observed.
Figure 5.- Shows a detail of the indicator means.
Figure 6.- Shows a diagram of the electrical operation of the luminaire.

### PREFERRED EMBODIMENT OF THE INVENTION

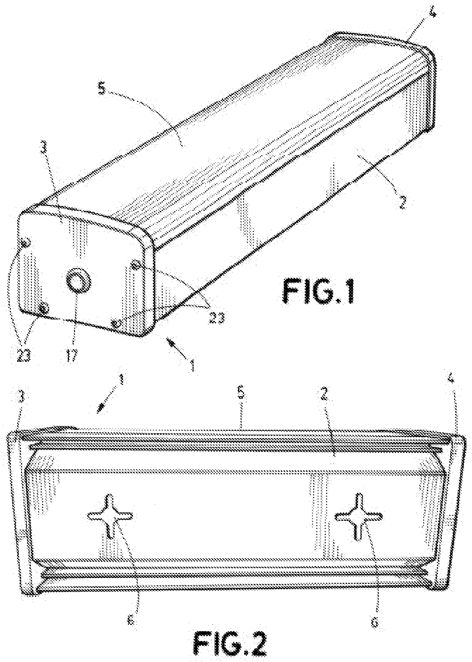

Next, with the aid of the attached figures 1-6 mentioned above, a detailed description of a preferred embodiment of an emergency luminaire (1) object of the present invention is provided below.

The luminaire (1) comprises a longitudinally elongated housing (2), which is preferably made of a metallic material, for example extruded aluminium.

As shown in figure 1, the housing (2) has two ends, with respect to the longitudinal direction. At each end, the housing (2) has a side opening. The luminaire (1) also includes side covers (3, 4) to cover the side openings. The side covers (3, 4) are preferably made of self-extinguishing polycarbonate. The housing (2) also comprises a front side and a rear side, there being on the front side a front opening extending longitudinally. A front cover (5), acting as a diffuser, which is transparent or translucent to visible light, covers the front opening. The front cover (5) is preferably made of self-extinguishing polycarbonate.

According to figure 2, on the rear side there are fixing means (6) to fix the luminaire (1), both horizontally and vertically, to a support (not shown), for example a profile, arranged on the wall, roof, etc. In the described example, two pairs of crosswise-oriented grooves are shown as fixing means (6).

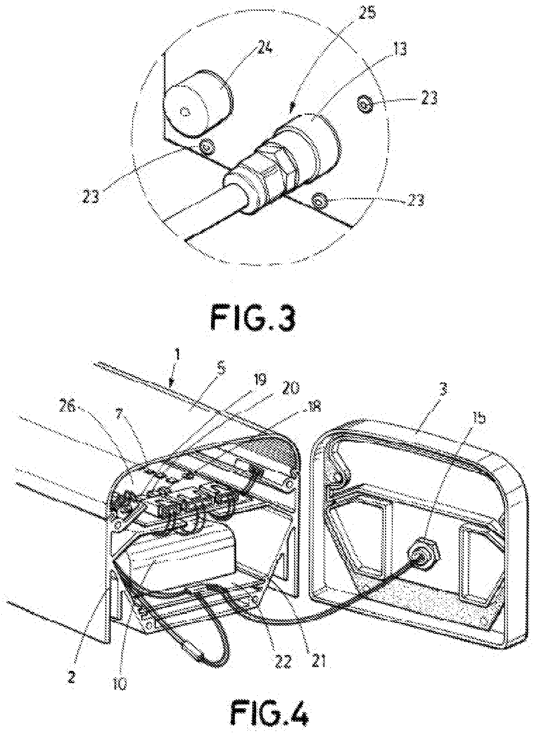

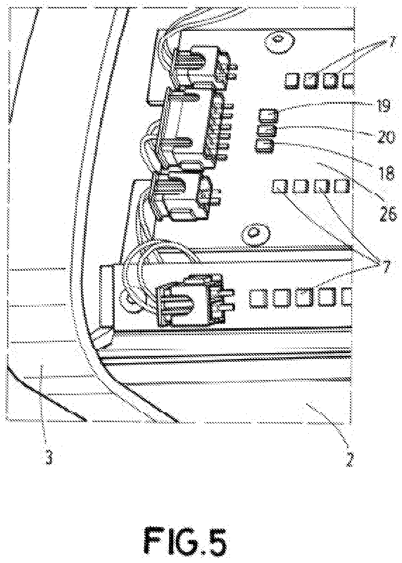

Inside the housing (2), according to figures 4 and 5, there is an arrangement of lighting elements (7), preferably lighting LEDs, for emitting light towards the outside of the housing (2) through the front cover (5). The lighting elements (7) are preferably arranged and oriented to provide lighting at an opening angle depending on the need for using the luminaire (1), for example, an opening angle of 120° or greater. Preferably, the lighting elements (7) are mounted on a panel (26), which in turn is fixed to the housing (2).

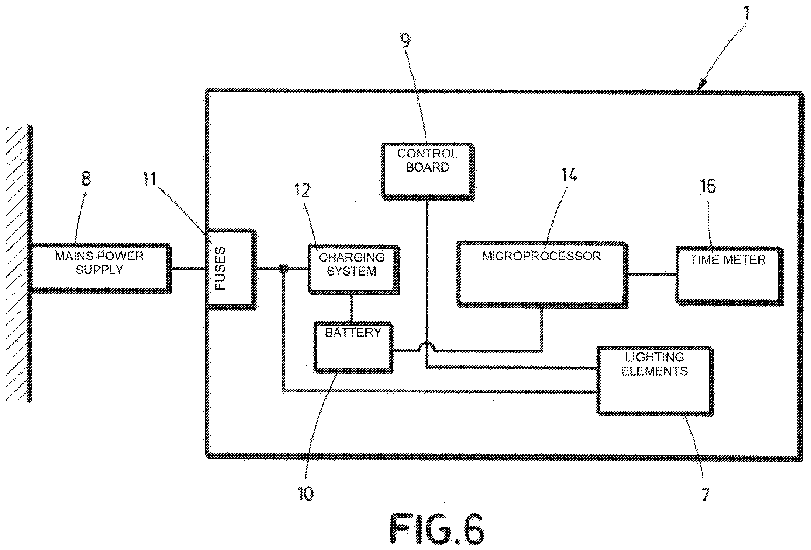

The luminaire (1) includes, as seen in figure 4, power supply means for supplying electricity to the lighting elements (7), where the power supply means comprise: mains power supply (not shown), for obtaining power from the electrical grid (8); emergency power supply; and a control board (9) for coordinating the operation of the mains power supply (8) and the emergency power supply, as shown in figure 6.

In particular, the mains power supply (8) operates by default until the control board (9) detects a failure in the supply of power from the electrical grid, which means that the operation of the luminaire (1) is of a SA type.

When there a failure in the supply of power from the electrical grid is detected, the control board (9) automatically switches to the emergency power supply. The switching occurs in a very short time, which is less than one second. The emergency power supply comprises, as seen in figure 4, at least one battery (10), preferably a single battery (10), such as a lithium iron phosphate battery, housed inside the housing (2), which makes it possible to light the lighting elements (7) during a predetermined autonomy time, for example, at least 120 minutes, with a current intensity that is preferably less than the intensity with the mains power supply (8).

The luminaire (1) can include fuses (11) to prevent power surges. In particular, two 2.5 A - 250 V fuses (11) are included, as seen in figure 6.

The luminaire (1) includes a charging system (12) for charging the battery (10), if necessary, when the mains power supply (8) is in operation, as seen in figure 6.

The luminaire (1) preferably further incorporates a manual switch (not shown) to turn the lighting elements (7) on and off while the mains power supply (8) is in operation.

The luminaire (1) of the invention is characterized by having testing functions, both manual and automatic, as will be explained below. To achieve this, the luminaire (1) includes, as seen in figure 6, a microprocessor (14) that is responsible for managing said functions, as well as, where appropriate, a test switch (15) preferably located on a first side cover (3) of the side covers (3, 4).

Through the automatic test function, the operation of the control board (9) and the battery (10) is checked automatically. With a fully charged battery (10), that is, when the battery (10) cannot receive more charge than it has, the microprocessor (14) provides, with a predetermined frequency (for example, one month), for the control board (9) to activate the emergency operation, that is, to switch between the mains power supply (8) and the emergency power supply through the battery (10). A time meter (16) determines whether the battery (10) is discharged or not before supplying power to the lighting elements (7) during a predetermined threshold autonomy time.

Through the manual test function, the operation of the control board (9) and the battery (10) is checked manually. With the battery (10) in full charge state, the microprocessor (14) provides, after a short press (not exceeding a predetermined threshold time, for example, one second) of the test switch (15), for the control board (9) to activate the emergency operation. Just like in the case of automatic testing, the time meter (16) determines whether the battery (10) is capable of supplying power to the lighting elements (7) during the predetermined threshold autonomy time.

Furthermore, the luminaire (1) has a battery cut-off function through which, with the emergency power supply in operation, the operation of the battery (10) (or batteries, as applicable) of the luminaire (1), or several luminaires (1) connected in parallel (as will be explained later), are selectively interrupted to prevent them from discharging. To do this, a cut-off switch (17) is pressed for a time greater than a predetermined threshold, for example five seconds. Preferably, the test switch (15) is the same as the cut-off switch (17).

To indicate the result of the automatic testing and the manual testing as illustrated in figures 4 and 5, the luminaire (1) further incorporates, preferably in the panel (26) of the lighting elements (7), indicator means (18, 19, 20) which indicate the state of operation and the state of charge of the battery (10). In particular, the indicator means (18, 19, 20) are configured to indicate the following situations: the battery (10) is charging; the battery (10) is fully charged; and the autonomy of the battery (10), while fully charged, has been reduced to below a predetermined threshold value, for example, 90 minutes, for a rated autonomy of 120 minutes.

Preferably, the indicator means (18, 19, 20) comprise light indicators (18, 19, 20) such as LED indicators, which lighting states indicate the situations described above. By way of example, the light indicators (18, 19, 20) comprise three LEDs (18, 19, 20), each of a different colour, such as red (18), green (19) and yellow (20). For example, a fixed red (18) LED indicates a situation of reduced autonomy, while a combination of the green (19) LED off and the yellow (20) LED on indicates the battery (10) is charging. A combination of the green (19) LED on and the yellow (20) LED off indicates the battery (10) is fully charged. Finally, a flashing red (18) LED indicates a failure in the control board (9), if an anomaly occurs on the control board (9), such as, for example, due to an error in an electronic component, a short-circuit, etc.

The battery (10) is easily replaceable, as seen in figure 4. In particular, the housing (2) can include inner rails (21), the battery (10) being fixable in a removable manner to a slidable support body (22) guided by the rails (21). On the other hand, a second side cover (4) of the side covers (3, 4) is fixed to the housing (2) in a removable manner, for example by means of screws (23) according to figure 1, to access the support body (22) to which the battery (10) is fixed. Once the second side cover (4) is removed, the battery (10) and, where appropriate, the test switch (15) are disconnected, the support body (22) is removed and a new battery (10) is installed by fixing it to the support body (22), as well as connecting it, including, where appropriate, the test switch (15), and fixing the second side cover (4).

According to a preferred embodiment, the emergency luminaire (1) of the invention has the following technical specifications.
- Operating voltage: 110 / 277 VAC.
- Rated frequency (fn): 50 / 60 Hz.
- Frequency variation: fn +/- 6%.
- Consumption: 35 W
- Power factor: > 0.9
- Rated luminous flux: 3740 lm.
- Emergency luminous flux: 2,161 lm.
- Protection: IP65; IK08.
- Colour temperature range: 5500-7000K.
- Battery (10): LiFePO4 (lithium iron phosphate battery).
- Autonomy of the battery (10): 120 minutes.
- Battery charging time (10): 24 h.
- Working temperature: -30 ºC - +50 ºC.
- Humidity range: 0 - 100%
- Dimensions: 342 x 126 x 96 (mm) + 53 mm (quick connectors).
- Opening angle: greater than 120º.
- Weight: 2.4 kg.
- Useful life: 8 years for the battery

A set of luminaires (1) such as those described above can be connected in parallel forming a lighting system as shown in figure 3. The lighting system therefore comprises a plurality of luminaires (1), where the luminaires (1) comprise connections (24) to connect to other luminaires (1) in parallel. The lighting system further comprises connectors (25), which carry out the connections (24) of the luminaires (1) connected in parallel. According to a preferred example, the connectors (25) are quick connectors provided with respective ends, each with a corresponding head (13). The heads (13) are configured to receive respective cables (not shown), such as: neutral cables, ground cables, network cables and battery cables. Once the cables are mounted on the heads (13) of the connectors (25), the heads (13) are connected to the connections (24) of the luminaires (1) by means of a simple fitting, such as a snap-on fitting.

## Claims

1. An emergency luminaire (1), comprising:
- lighting elements (7) to provide lighting;
- power supply means, for supplying power to the lighting elements (7), and comprising:
- mains power supply, for obtaining power from the electrical grid (8);
- emergency power supply, comprising at least one battery (10), for obtaining power in case of disconnection from, or failure, of the electrical grid (8); and
- a control board (9) for coordinating switching between the mains power supply (8) and the battery or batteries (10); and
- a charging system (12) for charging the battery (10) with the electrical grid (8); **characterized in that** it further comprises:
- a microprocessor (14) for controlling the control board (9), which is configured to command the control board (9) to switch from the mains power supply (8), to the emergency power supply, in which the battery (10) is discharged for supplying power to the lighting elements (7);
- a time meter (16) connected to the microprocessor (14) to determine whether the battery (10) is discharged before a predetermined threshold autonomy time has elapsed; and
- indicator means (18, 19, 20) to indicate whether the battery (10) is discharged before the threshold autonomy time has elapsed;

2. The emergency luminaire (1) according to claim 1, **characterized in that** the microprocessor (14) is configured to command the switching periodically and/or on a pre-programmed basis.

3. The emergency luminaire (1) according to claim 1, **characterized in that** it further comprises a test switch (15) connected to the microprocessor (14) for activating the switching when the microprocessor (14) detects the test switch (15) being pressed.

4. The emergency luminaire (1) according to any one of the claims 1-3, **characterized in that** it further comprises a cut-off switch (17) connected to the microprocessor (14) and/or battery (10) to disconnect the battery (10) in emergency mode by pressing the cut-off switch (17).

5. The emergency luminaire (1) according to claims 3 and 4, **characterized in that** the cut-off switch (17) is the same as the test switch (15).

6. The emergency luminaire (1) according to any one of the claims 1-5, **characterized in that** the indicator means (18, 19, 20) comprise light indicators (18, 19, 20).

7. The emergency luminaire (1) according to any one of the claims 1-6, **characterized in that** it further comprises a panel (26) fixed to the housing (2), where the lighting elements (7), as well as the indicator means (18, 19, 20), are mounted on the panel (26).

8. A lighting system **characterized in that** it comprises:
- a plurality of emergency luminaries (1) as described in any of claims 1-7;
- connections (24) arranged in the luminaries (1) for connecting the luminaries (1) in parallel; and
- connectors (25) for communicating the connections (24) of the luminaries (1) connected in parallel.
